# EUROPÄISCHE PATENTSCHRIFT

(11) **EP 1 125 716 B1**
(45) Veröffentlichungstag und Bekanntmachung des Hinweises auf die Patenterteilung: **07.04.2004**
(21) Anmeldenummer: 01101856.1
(22) Anmeldetag: 26.01.2001
(51) Int. Cl.: B22F 3/04, B22F 3/14, H01F 41/02

(54) **Vorrichtung und Verfahren zur Nachformung eines Werkstückes**
Apparatus and process for postforming one part
Appareil et procédé pour postformer une pièce

(30) Priorität: 09.02.2000 DE 10005551
(43) Veröffentlichungstag der Anmeldung: 22.08.2001
(73) Patentinhaber: ROBERT BOSCH GMBH, 70442 Stuttgart (DE)
(72) Erfinder: Koch, Hans-Peter, 70435 Stuttgart (DE); Ruthardt, Siegfried, 71155 Altdorf (DE); Winkler, Jochen, 73730 Esslingen (DE); Bober, Torsten, 71272 Renningen (DE)

(56) Entgegenhaltungen:
- GB-A- 438 612

## Beschreibung

Die Erfindung betrifft eine Preßvorrichtung zur Nachformung eines insbesondere thermoplastischen Werkstückes sowie ein Verfahren zur Nachformung eines Werkstückes mit einer derartigen Preßvorrichtung nach der Gattung der unabhängigen Ansprüche.

### Stand der Technik

Polymergebundene Eisenpulver werden heute in zunehmendem Maß vor allem als Werkstoffe in weichmagnetischen Komponenten für schnelle Steller und Aktoren eingesetzt. Dabei erfolgt nach dem Pressen derartiger Pulver bzw. Pulvermischungen bei ihrer Herstellung üblicherweise eine thermische Nachbehandlung zur Verbesserung der mechanischen Festigkeit der erzeugten Verbunde.

Weiterhin ist es in vielen Fällen üblich und erforderlich, eine mechanische Nachbearbeitung der erzeugten Formkörper vorzunehmen, die zur Verbesserung der Oberflächengüte dient. Mit dieser mechanischen Nachbearbeitung ist jedoch vielfach eine unerwünschte Schädigung des oberflächlichen Werkstoffgefüges durch Ausbröckeln von Pulverteilchen, Auflockerung des Verbundes oder Verletzung eines Polymer-Schutzschicht-Verbundes.

Es ist außerdem bekannt, pulvermetallurgische Bauteile zur Verbesserung der Maßhaltigkeit und Oberflächengüte vollständig oder in Teilbereichen durch Pressen in Matrizenwerkzeugen nachzuformen.

### Vorteile der Erfindung

Die erfindungsgemäße Preßvorrichtung und das damit durchgeführte erfindungsgemäße Verfahren zur Nachformung eines Werkstückes hat gegenüber dem Stand der Technik den Vorteil, daß damit eine Verbesserung der Formhaltigkeit, insbesondere der Ebenheit, des nachgeformten Werkstückes erreicht wird, so daß diese beispielsweise bei speziellen magnetischen Komponenten eingesetzt werden können, bei denen es wichtig ist, eine auftretende Magnetkraftstreuung möglichst zu minimieren. Weiterhin ermöglicht es das erfindungsgemäße Verfahren, Unebenheiten und Preßgrate zu entfernen und die Verbundfestigkeit des nachgeformten Werkstückes zu erhöhen.

Somit wird während der Nachformung ein schnelles Erreichen der gewünschten Zielgeometrie ermöglicht, ohne daß eine negative Veränderung des Werkstückgefüges auftritt.

Die erfindungsgemäße Vorrichtung und das erfindungsgemäße Verfahren können weiterhin automatisiert in bereits bestehende Fertigungsprozesse eingebunden werden. Damit zeichnet sich das erfindungsgemäße Verfahren durch eine hohe Wirtschaftlichkeit aus und es ermöglicht, kostenaufwendige und schädigende mechanische Nachbearbeitungsverfahren zu vermeiden.

Vorteilhafte Weiterbildungen der Erfindung ergeben sich aus in den Unteransprüchen genannten Maßnahmen.

So ist es besonders vorteilhaft, wenn als Preßwerkzeug ein Preßstempel bzw. ein Matrizenpreßwerkzeug eingesetzt wird, der zusätzlich eine Vorrichtung zur Zentrierung oder Positionierung des Werkstückes bzw. des Preßwerkzeuges relativ zu dem Werkstück bei der Nachformung, beispielsweise in Form eines Zentrierdornes, aufweist. Auf diese Weise läßt sich die erzielte Genauigkeit der Nachformung wesentlich erhöhen.

Das Preßwerkzeug ist weiter vorteilhaft zumindest bereichsweise durch Heizleiter umgeben, die mit einer Regelung verbunden sind, so daß eine Solltemperatur des Preßwerkzeuges in einfacher Weise einstellbar ist. Eine derartige Preßvorrichtung zur Nachformung eines Werkstückes erlaubt es, nach der Nachformung des Werkstückes Ebenheitstoleranzen von weniger als 10 µm zu erreichen.

Bei dem erfindungsgemäßen Verfahren zur Nachformung eines Werkstückes ist es darüber hinaus vorteilhaft, daß neben der Temperatur des Preßwerkzeuges als Parameter auch die Kontaktzeit und die Preßkraft zur Verfügung stehen, so daß es möglich ist, durch geeignete Wahl dieser Parameter die Preßkraft so niedrig wie möglich zu halten, um das Gefüge des nachzuformenden Werkstückes beim Pressen möglichst nicht zu schädigen und dennoch die gewünschte Zielgeometrie zu erreichen. Weiterhin ist es auf diese Weise gleichzeitig möglich, auch die Kontaktzeit möglichst kurz zu halten, so daß die Wirtschaftlichkeit des erfindungsgemäßen Verfahrens gegeben ist.

### Zeichnung

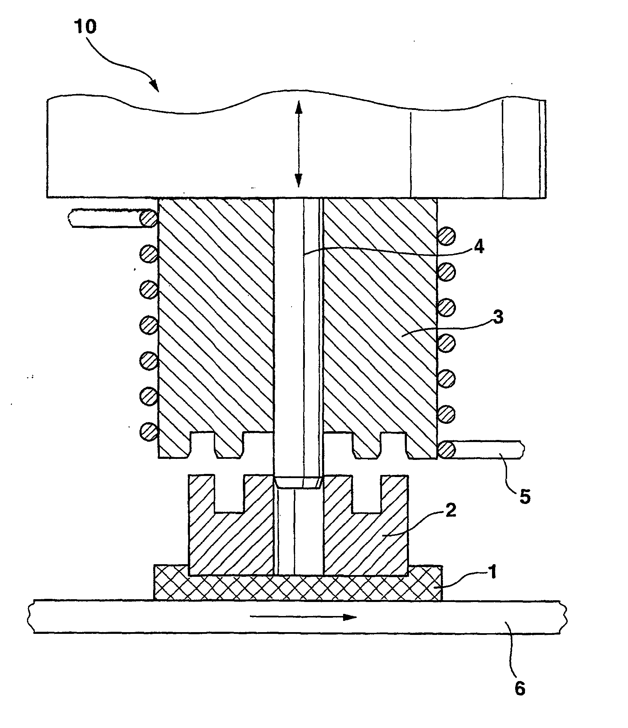

Ausführungsbeispiele der Erfindung werden anhand der Zeichnung und der nachfolgenden Beschreibung näher erläutert.

Die Figur zeigt eine Preßvorrichtung mit einem Preßstempel und einer Aufnahmevorrichtung in der ein Werkstück nachgeformt wird.

### Ausführungsbeispiele

Die Figur zeigt eine Preßvorrichtung 10 mit einem Preßwerkzeug 3 in Form eines zylindersymmetrischen Preßstempels bzw. eines Matrizenpreßwerkzeuges in dessen Zentrum ein Zentrierdorn 4 vorgesehen ist. Der Preßstempel 3 ist weiter durch eine Heizvorrichtung 5 zumindest bereichsweise umwickelt, wobei die Heizvorrichtung 5 Heizleiter aufweist, die mit einer Regelung elektrisch verbunden sind, so daß damit eine Solltemperatur des Preßstempels 3 einstellbar ist. Der Preßstempel 3 und der Zentrierdorn 4 sind weiter derart mit der Preßvorrichtung 10 verbunden, daß sie in Richtung des eingezeichneten Pfeils angehoben und abgesenkt werden können. Weiterhin ist eine Transportvorrichtung 6, beispielsweise ein Transportband oder eine Transportfläche, vorgesehen, die beispielsweise in Richtung des eingetragenen Pfeils relativ zu dem Preßstempel 3 bewegt werden kann, so daß mittels der Transportvorrichtung 6 ein nachzuformendes Werkstück 2 relativ zu dem Preßstempel 3 bzw. dem Preßwerkzeug 3 bewegbar bzw. positionierbar ist.

Auf der Transportvorrichtung 6 befindet sich weiter eine Aufnahmevorrichtung 1 zur Aufnahme des nachzuformenden Werkstückes 2.

Das Werkstück 2 ist im hier erläuterten Beispiel ein Magnetkern, wie er beispielsweise in Common-Rail-Injektoren für Kraftfahrzeuge eingesetzt wird.

Bei der Nachformung des Werkstückes 2 wird somit der Preßstempel 3 mit Hilfe eines, oder bei Bedarf auch mehreren Zentrierdornen 4 zum Werkstück 2 geführt, wobei sich die Geometrie bzw. Strukturierung des Preßwerkzeugs 3 nach den Ausgangsmaßen des Werkstückes 2 sowie nach seiner Zielgeometrie richtet. Im einzelnen ist dazu das Preßwerkzeug 3 bzw. der Preßstempel 3 entsprechend der zu erzielenden Nachformung des Werkstückes 2 als Negativform zumindest in den nachzuformenden Bereichen des Werkstückes 2 strukturiert. Zur Erzielung von möglichst geringen Ebenheitstoleranzen bei der Nachformung des Werkstückes 2 kann der Preßstempel 3 weiter durch an sich bekannte Maßnahmen zur Oberflächenbearbeitung, insbesondere durch Polieren, vorbehandelt sein.

Als Werkstück 2, das durch Pressen in der Preßvorrichtung 10 nachgeformt werden soll, wird im erläuterten Beispiel eine Formmasse aus phosphatiertem Reineisenpulver der Typen ABM und Somaloy verwendet, die unter diesen Handelsbezeichnungen von der Firma Höganäs, Schweden, bezogen werden können, und die mit je 0,6 Massen% Polyamid bzw. Polyphenylensulfid vermischt worden sind. Nach einem an sich bekannten vorausgehenden Pressen dieser Formmassen, beispielsweise zu einem Magnetkern, wird das mit Formmasse geformte Werkstück 2 dann zumindest bereichsweise mit der erläuterten Preßvorrichtung 10 nachgeformt.

Im einzelnen wird zur Nachformung des Werkstückes 2 mit der Preßvorrichtung 10 zunächst der Preßstempel 3 durch die regelbare Heizvorrichtung 5 auf Solltemperatur gebracht und zunächst auf dieser gehalten. Die eingestellte Temperatur des Preßstempels 3 richtet sich dabei nach dem Erweichungsverhalten des eingesetzten Polymers in dem Werkstück 2 sowie nach der Kontaktzeit zwischen dem Werkstück 2 und dem Preßstempel 3.

Die Temperatur des Preßstempels 3 wird bevorzugt so gewählt, daß sich der Polymerbinder in dem Werkstück 2 erwärmt, so daß sich das Werkstück 2 in der gewünschten Weise verformen läßt, ohne daß es dabei zu Verklebungen zwischen dem Werkstück 2 und dem Preßstempel 3 kommt, und ohne daß das Werkstoffgefüge des Werkstückes 2 nachhaltig geschädigt wird. Weiter wird die Preßkraft bevorzugt so niedrig wie möglich gehalten, um das Gefüge des Werkstückes 2 nicht zu schädigen und dennoch die gewünschte Zielgeometrie bzw. Nachformung des Werkstückes 2 zu erreichen.

Im einzelnen erfolgt die Nachformung des Werkstückes 2 aus phosphatiertem Reineisenpulver und Polymerbinder bei Temperaturen zwischen 100° C und 500° C, insbesondere 200° C bis 400° C. Als besonders vorteilhaft hat sich eine Temperatur zwischen 280° C und 320° C sowie eine Kontaktzeit um ca. 2 s herausgestellt. Die Kontaktzeit kann jedoch auch zwischen 0,5 s bis 20 s, insbesondere 1 s bis 5 s, betragen.

Als Preßkraft bei der Nachformung des Werkstückes 2 wird bevorzugt eine Preßkraft von 100 N bis 100 kN, insbesondere 10k N bis 40 kN eingesetzt. Im Fall eines Werkstückes 2 aus einem Reineisen-Polymer-Verbundwerkstoff, das bei den genannten Temperaturen bzw. Kontaktzeiten nachgeformt werden soll, hat sich eine Preßkraft von ca. 25 N als besonders vorteilhaft herausgestellt.

Sofern Werkstücke 2 aus anderen als den genannten Eisenpulver-Polymer-Verbundwerkstoffen nachgeformt werden sollen, sind jedoch auch andere Parameter für Temperatur, Kontaktzeit und Preßkraft möglich. Diese muß der Fachmann im Einzelfall anhand der jeweiligen Materialeigenschaften durch einfache Vorversuche ermitteln.

Als besonders geeignet für das erläuterte Verfahren zur Nachformung haben sich thermoplastische Polymer-Pulver-Verbundwerkstoffe herausgestellt.

Im übrigen kann es zweckmäßig sein, das Preßwerkzeug sowohl vor als auch während der Nachformung zu beheizen.

## Patentansprüche

1. Preßvorrichtung zur Nachformung zumindest eines Teilbereiches eines Werkstückes (2) durch Pressen mit mindestens einem Preßwerkzeug (3) und mindestens einer Aufnahmevorrichtung (1) für das Werkstück (2), **dadurch gekennzeichnet, daß** das Preßwerkzeug (3) zumindest bereichsweise mittels mindestens einer Heizvorrichtung (5) beheizbar ist.

2. Preßvorrichtung nach Anspruch 1, **dadurch gekennzeichnet, daß** das Preßwerkzeug (3) ein Preßstempel (3) oder eine Mehrzahl von Preßstempeln (3) ist, und entsprechend der zu erzielenden Nachformung des Werkstückes (2) als Negativform strukturiert ist.

3. Preßvorrichtung nach Anspruch 1 oder 2, **dadurch gekennzeichnet, daß** das Preßwerkzeug (3) mindestens eine Einrichtung zum Ausrichten, Zentrieren oder Positionieren des Werkstückes (2) und/oder des Preßwerkzeuges (3) bei der Nachformung aufweist.

4. Preßvorrichtung nach Anspruch 1, **dadurch gekennzeichnet, daß** die Heizvorrichtung (5) Heizleiter aufweist, die das Preßwerkzeug (3) zumindest bereichsweise umgeben.

5. Preßvorrichtung nach Anspruch 1, **dadurch gekennzeichnet, daß** die Aufnahmevorrichtung (1) auf einer Transportvorrichtung (6) angeordnet ist, mittels der ein in der Aufnahmevorrichtung (1) befindliches Werkstück (2) relativ zu dem Preßwerkzeug (3) bewegbar und/oder positionierbar ist.

6. Preßvorrichtung nach Anspruch 1, **dadurch gekennzeichnet, daß** die Heizvorrichtung (5) eine Regelung aufweist, mit der eine Solltemperatur des Preßwerkzeuges (3) einstellbar ist.

7. Verfahren zur Nachformung zumindest eines Teilbereiches eines Werkstückes (2) mit einer Preßvorrichtung (10) nach mindestens einem der vorangehenden Ansprüche, wobei das in der Aufnahmevorrichtung (1) befindliche Werkstück (2) zumindest mit seinem nachzuformenden Teilbereich durch das Preßwerkzeug (3), insbesondere den Preßstempel (3), durch eine Pressung nachgeformt wird, **dadurch gekennzeichnet, daß** das Preßwerkzeug (3) vor und/oder während der Nachformung beheizt wird.

8. Verfahren nach Anspruch 7, **dadurch gekennzeichnet, daß** die Nachformung des Werkstückes (2) durch Pressung bei einer Preßkraft von 1000 N bis 100 kN, insbesondere 10 kN bis 40 kN, erfolgt.

9. Verfahren nach Anspruch 7 oder 8, **dadurch gekennzeichnet, daß** das Preßwerkzeug (3) insbesondere vor der Nachformung auf eine Temperatur von 100° C bis 500° C, insbesondere 200° C bis 400° C, aufgeheizt wird.

10. Verfahren nach mindestens einem der Ansprüche 7 bis 9, **dadurch gekennzeichnet, daß** die Nachformung des Werkstückes (2) durch Pressen in dem Preßwerkzeug (3) während einer Kontaktzeit von 0,5 s bis 20 s, insbesondere 1 s bis 5 s, erfolgt.

11. Verfahren nach mindestens einem der Ansprüche 7 bis 10, **dadurch gekennzeichnet, daß** das Preßwerkzeug (3) derart beheizt wird, daß das nachzuformende Werkstück (2) während der Pressung durch Erweichen formbar wird.

12. Verwendung des Verfahrens oder der Vorrichtung nach mindestens einem der vorangehenden Ansprüche zur Nachformung eines Werkstückes (2), insbesondere eines Magnetkerns einer Spule, das zumindest bereichsweise aus einem thermoplastischen Pulver-Polymer-Verbundwerkstoff, insbesondere einem gepreßten Eisenpulver-Polymer-Verbundwerkstoff, besteht.

## Claims

1. Press device for post-forming at least a partial region of a workpiece (2) by pressing, having at least one press tool (3) and at least one receiving device (1) for the workpiece (2), **characterized in that** the press tool (3), at least in regions, can be heated by means of at least one heating device (5).

2. Press device according to Claim 1, **characterized in that** the press tool (3) is a press ram (3) or a plurality of press rams (3), and is structured so as to correspond, as a negative to the post-forming of the workpiece (2) which is to be brought about.

3. Press device according to Claim 1 or 2, **characterized in that** the press tool (3) has at least one means for orienting, centring or positioning the workpiece (2) and/or the press tool (3) during the post-forming.

4. Press device according to Claim 1, **characterized in that** the heating device (5) has heating conductors which surround the press tool (3) at least in regions.

5. Press device according to Claim 1, **characterized in that** the receiving device (1) is arranged on a conveyor device (6), by means of which a workpiece (2) located in the receiving device (1) can be moved and/or positioned relative to the press tool (3).

6. Press device according to Claim 1, **characterized in that** the heating device (5) has a control means which can be used to establish a set temperature of the press tool (3).

7. Process for post-forming at least a partial region of a workpiece (2) using a press device (10) according to at least one of the preceding claims, in which at least the partial region of the workpiece (2), located in the receiving device (1) which is to be post-formed, is post-formed by the press tool (3), in particular the press ram (3), by means of a pressing operation, **characterized in that** the press tool (3) is heated before and/or during the post-forming.

8. Process according to Claim 7, **characterized in that** the post-forming of the workpiece (2) takes place by pressing under a press force of 1000 N to 100 kN, in particular 10 kN to 40 kN.

9. Process according to Claim 7 or 8, **characterized in that** the press tool (3), in particular prior to the post-forming, is heated to a temperature of 100°C to 500°C, in particular 200°C to 400°C.

10. Process according to at least one of Claims 7 to 9, **characterized in that** the post-forming of the workpiece (2) is carried out by pressing in the press tool (3) for a contact time of 0.5 s to 20 s, in particular 1 s to 5 s.

11. Process according to at least one of Claims 7 to 10, **characterized in that** the press tool (3) is heated in such a manner that the workpiece (2) which is to be post-formed can be formed by softening during the pressing.

12. Use of the process or device according to at least one of the preceding claims for the post-forming of a workpiece (2), in particular a magnet core of a coil, which at least in regions consists of a thermoplastic powder-polymer composite material, in particular a pressed iron powder-polymer composite material.

## Revendications

1. Dispositif de presse pour postformer au moins une zone partielle d'une pièce (2) par compression avec au moins un outil de presse (3) et au moins un dispositif de réception (1) pour la pièce (2),
**caractérisé en ce que**
l'outil de presse (3) peut être chauffé au moins partiellement par au moins un dispositif de chauffage (5).

2. Dispositif de presse selon la revendication 1,
**caractérisé en ce que**
l'outil de presse (3) est un poinçon de presse (3) ou une pluralité de poinçons de presse (3), et il est structuré en tant que forme négative en fonction du postformage de la pièce (2) à obtenir.

3. Dispositif de presse selon la revendication 1 ou 2,
**caractérisé en ce que**
l'outil de presse (3) comporte au moins un dispositif permettant d'orienter, de centrer ou de positionner la pièce (2) et/ou l'outil de presse (3) lors du postformage.

4. Dispositif de presse selon la revendication 1,
**caractérisé en ce que**
le dispositif de chauffage (5) comporte des conducteurs chauffants qui entourent au moins partiellement l'outil de presse (3).

5. Dispositif de presse selon la revendication 1,
**caractérisé en ce que**
le dispositif de réception (1) est placé sur un dispositif de transport (6) qui déplace et/ou positionne une pièce (2) se trouvant dans le dispositif de réception (1) par rapport à l'outil de presse (3).

6. Dispositif de presse selon la revendication 1,
**caractérisé en ce que**
le dispositif de chauffage (5) comporte un dispositif de réglage permettant de régler une température théorique de l'outil de presse (3).

7. Procédé pour postformer au moins un sous-domaine d'une pièce (2) avec un dispositif de presse (10) selon au moins l'une quelconque des revendications précédentes, la pièce (2) se trouvant dans le dispositif de réception (1) étant postformée par compression au moins au niveau d'une zone partielle à postformer, par l'outil de presse (3), notamment par le poinçon (3),
**caractérisé en ce que**
l'outil de presse (3) est chauffé avant et/ou pendant le postformage.

8. Procédé selon la revendication 7,
**caractérisé en ce que**
le postformage de la pièce (2) a lieu par compression à une force de compression comprise entre 1000 N et 100 kN, et notamment entre 10 kN et 40 kN.

9. Procédé selon la revendication 7 ou 8,
**caractérisé en ce que**
l'outil de presse (3), notamment avant le postformage est chauffé à une température comprise entre 100°C et 500°C, notamment entre 200°C et 400°C.

10. Procédé selon au moins l'une quelconque des revendications 7 à 9,
**caractérisé en ce que**
le postformage de la pièce (2) a lieu par compression dans l'outil de presse (3) pendant un temps de contact compris entre 0,5 s et 20 s, et notamment entre 1 s et 5 s.

11. Procédé selon au moins l'une quelconque des revendications 7 à 10,
**caractérisé en ce que**
l'outil de presse (3) est chauffé de manière à ce que la pièce (2) à postformer puisse être déformée par ramollissement pendant la compression.

12. Utilisation du procédé ou du dispositif selon au moins l'une quelconque des revendications précédentes pour postformer une pièce (2), notamment un noyau magnétique d'une bobine, qui se compose au moins partiellement d'un matériau composite thermoplastique poudre/polymère, notamment d'un matériau composite pressé poudre de fer/polymère.
